(19) Europäisches Patentamt
European Patent Office
Office européen des brevets

(11) Publication number : **0 473 346 A2**

(12) # EUROPEAN PATENT APPLICATION

(21) Application number : **91307618.8**

(51) Int. Cl.$^5$ : **G11B 7/24**

(22) Date of filing : **19.08.91**

(30) Priority : **22.08.90 JP 219062/90**

(43) Date of publication of application :
**04.03.92 Bulletin 92/10**

(84) Designated Contracting States :
**DE FR GB**

(71) Applicant : **TEIJIN LIMITED**
**6-7, Minamihonmachi 1-chome Chuo-ku**
**Osaka-shi Osaka 541 (JP)**

(72) Inventor : **Kawaguchi, Takeyuki**
**888-64, Katakura-cho**
**Hachioji-shi, Tokyo (JP)**

(74) Representative : **Votier, Sidney David et al**
**CARPMAELS & RANSFORD 43, Bloomsbury Square**
**London WC1A 2RA (GB)**

(54) **Rewritable organic recording medium, process for the production thereof, and method of recording and erasing.**

(57) A rewritable organic recording medium comprising :
(A) a substrate, and
(B) a single recording layer containing a crosslinked polymer and a dyestuff, the crosslinked polymer having a crosslinking density which gradually decreases in a layer thickness direction from one surface of the single recording layer to the other surface of the single recording layer ; a process for the production of the rewritable organic recording medium ; a method of recording data comprising by irradiating the rewritable organic recording medium with strong laser beam ; and a method of erasing a record.

EP 0 473 346 A2

FIG. 1

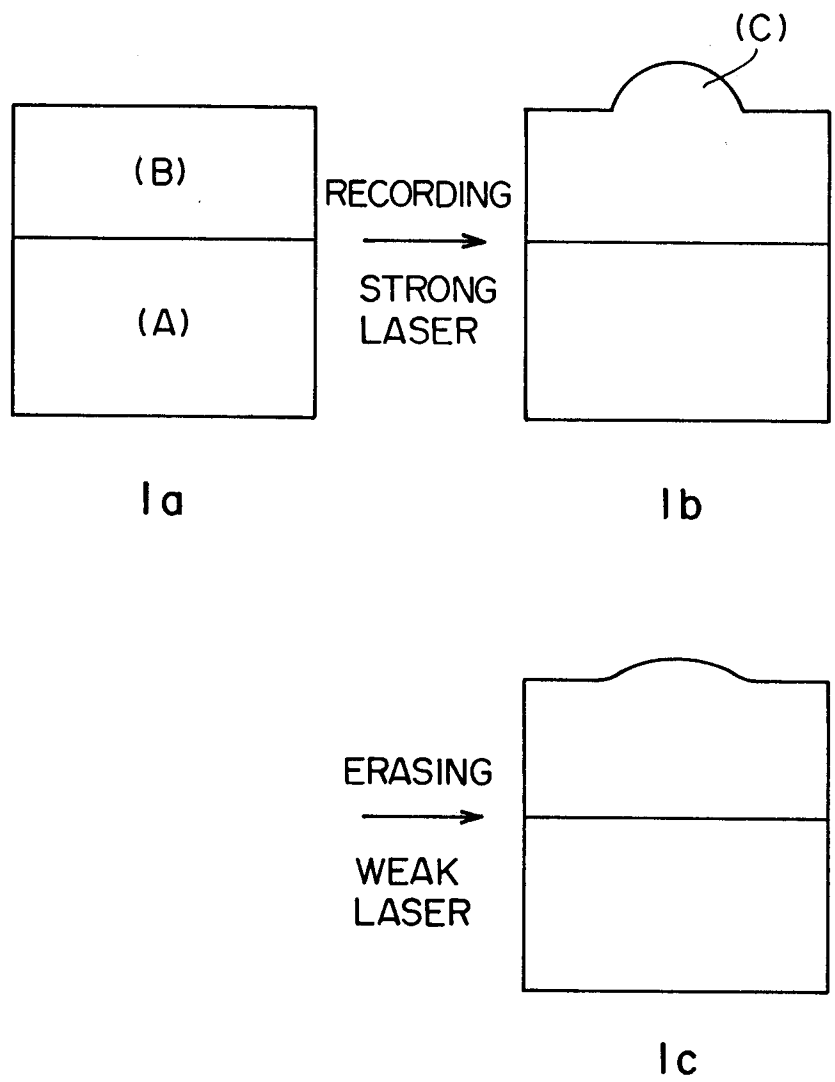

## DETAILED DESCRIPTION OF THE INVENTION

The present invention relates to a rewritable organic recording medium and a process for producing the medium, and a method of recording and erasing recorded data. More specifically, it relates to a rewritable organic recording medium which efficiently permits the writing of optical data and the erasing of a record bump by a morphological change (bump formation) when heated and a process for the production thereof, and a method of writing data on the medium and a method of erasing the data.

Japanese Laid-Open Patent Publication No. 163891/1986 discloses an optical recording medium having a recording layer formed of an organic dyestuff alone. Similar optical recording media are also disclosed in Japanese Laid-Open Patent Publications Nos. 268487/1986, 56191/1987, 122787/1987, 39286/1987 and 72594/1988.

Japanese Journal of Applied Physics, vol. 22, No. 2, February, 1983, pp 340-343 also describes optical recording media consisting of a thermoplastic oligomer resin blended with a photoabsorbing pigment.

Optical recording media which have a recording layer formed of a similar combination of a dyestuff and an organic polymer are also disclosed in Japanese Laid-Open Patent Publications Nos. 90291/1987, 62794/1988 and 191691/1988.

In any of the above optical recording media, however, the recording principle is based on an irreversible morphological change (which is pit formation in many cases) caused by means of heat generated when a dyestuff absorbs light (which is often laser beam). It is therefore very difficult or impossible to erase recorded data. That is, in the optical recording media of the former type having a recording layer formed of an organic dyestuff alone, the recording is carried out by means of pit formation, which involves evaporation and dissipation of the dyestuff, and once-formed pits therefore cannot be erased. In the optical recording media of the latter type having a recording layer formed of a combination of a dyestuff and an organic polymer, the recording is carried out by forming pits with flow deformation of the polymer. In order to erase once-formed pits, therefore, it is required either to heat a whole track including such data pits with laser beam irradiation and slowly cool it or to heat the entire medium surface and slowly cool it.

U.S. Patents 4,719,615 and 4,852,075 discloses a writable and erasable medium comprising an expansion layer which expands and forms a dome-shaped projection (bump) under heat by laser beam irradiation and a retention layer which holds the projection (bump). When data is written on this medium, irradiation with laser beam is carried out at an absorption wavelength ($\lambda_1$) of a dyestuff pre-contained in the expansion layer so that the expansion layer forms bumps, and the retention layer holds the formed bumps. When the formed bumps are erased, irradiation with laser beam is carried out at an absorption wavelength ($\lambda_2$) of a dyestuff pre-contained in the retention layer so that the retention layer is heated to a temperature of higher than its Tg and that the retention layer cannot hold the bump form.

Similar media having an expansion layer and a retention layer are also disclosed in U.S. Patents Nos. 4,780,867, 4,901,304 and 4,825,430.

While having an advantage of reversible recording and erasing, the above recording media still have problems in that (a) they require the use of two laser beams having a different wavelength from each other, one having one wavelength for recording and another having another wavelength for erasing, that (b) they require two different dyestuffs having a different absorption maximum wavelength and two different polymers, and that (c) the layer structure of such media is complicated.

Further, in order to efficiently carry out the recording on the above media having dual layers of a dyestuff layer and a polymer layer, i,e, in order to raise a bump as high as possible, it is necessary to restore a glass state of the retention layer rapidly while said layer is in a high degree of thermal expansion. For this purpose, it is preferred to use a polymer having as high a Tg as possible for the retention layer. Meanwhile, the erasing can be efficiently carried out when a polymer having a lower Tg is used for the retention layer to the contrary. Moreover, for obtaining an erasable medium, an irreversible deformation of the retention layer with laser beam irradiation, i.e. flow deformation of the polymer is undesirable.

On the other hand, the polymer for the expansion layer is required to have a high thermal expansion coefficient and a high modulus of rubber elasticity. In general, in order to obtain a high thermal expansion coefficient and a high modulus of rubber elasticity, it is necessary to control the crosslinking degree of the resin properly. However, when a polymer for the expansion layer is controlled to have too low a degree of crosslinking, the polymer is sometimes liable to be destroyed, or a dyestuff in the expansion layer is sometimes liable to be eluted, by a solvent used for the retention layer when the retention layer is coated. As described above, the properties required of the resin for the retention layer and properties required of the resin for the expansion layer are often incompatible, and it is difficult to obtain a good balance between the properties of these two resins.

For dual layer recording media having the above problems, European Laid-Open Patent Application No.

0 379 276 proposes a rewritable optical recording organic medium having a single layer, and a method of writing and erasing with the medium.

The above recording medium comprises a layer in which an organic medium which can reversibly change to a resinous state at a low temperature and to a rubbery state at a high temperature contains a dyestuff having high reflection properties and high absorption properties. In this recording medium, a projection portion (bump) can be formed by partially and rapidly heating a irradiation spot by irradiation with strong laser beam oscillating at a wavelength corresponding to the absorption wavelength of the dyestuff, and cooling the spot rapidly. On the other hand, the bump can be decreased by heating under irradiatlon with weak laser beam and cooling the bump portion slowly .

In the above recording medium, the layer composed of an organic medium and a dyestuff has a crosslinking density which is almost uniform in the layer thickness direction. As a result, the layer as a whole exhibits a resinous state at a low temperature and a rubbery state at a high temperature as described above.

As another proposal, U.S. Patent 4,901,304 discloses a single layer medium which is provided with a dyestuff concentration gradient in the layer thickness direction by forming a coating of a dyestuff solution on the single layer medium surface, and a recording medium having an assymetric structure formed on the basis of a difference between a solvent evaporation rate on the surface and that in the interior.

Problems with the above recording media are that the media are sometimes destroyed by a coating solvent when the dyestuff solution is applied, that the number of coating-forming steps increases, and the like. While the medium having an assymetric structure has a difference in the resin density in the layer thickness direction, there is no difference in the crosslinking density which plays an important role in recording properties.

It is an object of the present invention to provide a novel rewritable organic recording medium.

It is another object of the present invention to provide a novel rewritable organic recording medium having a single recording layer which permits writing and erasing.

It is still another object of the present invention to provide a novel rewritable organic recording medium having a recording layer which can be formed by applying an organic solvent-soluble composition.

It is further another object of the present invention to provide a novel rewritable organic recording medium which has functions of both a retention layer and an expansion layer and which is free from the above problems of conventional single layer media.

It is yet another object of the present invention to provide a novel rewritable organic recording medium having a single recording layer of which the crosslinking density decreases in the layer thickness direction.

Further, it is another object of the present invention to provide an industrially advantageous process for the production of the above recording medium of the present invention.

It is further another object of the present invention to provide a method of recording data on the above recording medium of the present invention.

It is still further another object of the present invention to provide a method of erasing data recorded on the above recording medium of the present invention.

The above and other objects and advantages of the present invention will be apparent from the following description.

According to the present invention, the above objects and advantages of the present invention can be achieved, first, by a rewritable organic recording medium comprising:

(A) a substrate, and

(B) a single recording layer containing a crosslinked polymer and a dyestuff, the crosslinked polymer having a crosslinking density which gradually decreases in a layer thickness direction from one surface of the single recording layer to the other surface of the single recording layer.

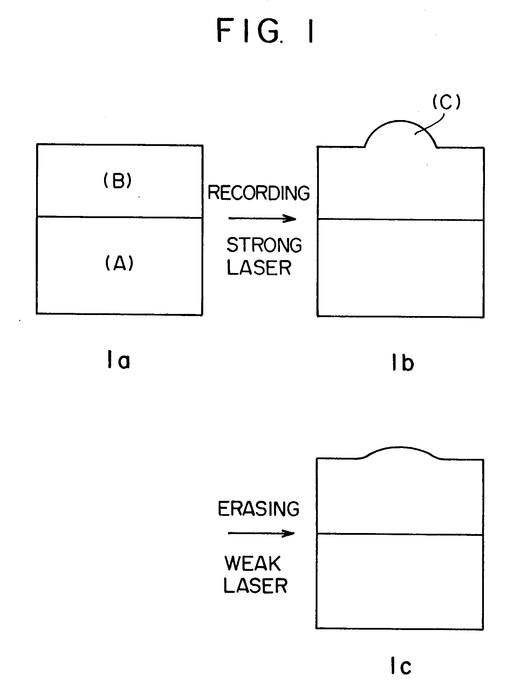

Fig. 1 is a schematic view for the explanation of the principle of recording and erasing data on a recording medium according to the present invention.

The rewritable organic recording medium of the present invention has a single recording layer containing a crosslinkable polymer and a dyestuff, the crosslinking density of the polymer gradually decreasing in the layer thickness direction from one surface of the layer to the other surface of the layer.

It is preferable and advantageous that the above recording layer has two portions, one which is the medium surface or near to the medium surface and is in a not-rubbery state at room temperature and in a rubbery state at a higher temperature and other portion which is far from the medium surface (inner portion) and is in a rubbery state both at room temperature and at a higher temperature.

The above "room temperature" refers to about 0 to about 40°C, and the "higher temperature" refers to about 80 to about 150°C.

The crosslinked polymer is suitably a photo-crosslinked product of a photo-crosslinkable polymer or oligomer (P).

As a photo-crosslinkable polymer or oligomer (P), preferred is at least one polymer or oligomer (P) selected

from an epoxy, a polycarbonate and a modified phenoxy which have a photo-crosslinkable, e.g. UV light-crosslinkable functional group.

The recording medium, recording layer, crosslinked polymer, dyestuff, etc., used in the present invention will be more apparent from the following description.

According to the present invention, the above rewritable organic recording medium of the present invention is produced by a process which comprises:

(1) applying a composition containing a dyestuff, a photo-crosslinkable polymer or oligomer and optionally a compound having an absorption band in a wavelength region of actinic radiation on a substrate or a layer positioned on the substrate to form a thin film of the composition, provided that at least one of the dyestuff and the photo-crosslinkable polymer or oligomer has an absorption band in a wavelength region of actinic radiation when the composition does not contain the compound having an absorption band in a wavelength region of actinic radiation, and

(2) irradiating the thin film of the composition with actinic radiation.

The substrate used in the present invention is preferably transparent. The base material as a substrate is selected, for example, from polycarbonate, poly(ethylene terephthalate), poly(methyl methacrylate), glass, etc. Such a substrate may be in the form, e.g. of a plate or a film.

In the process of the present invention, at first, a composition containing a dyestuff and a photo-crosslinkable polymer or oligomer is applied on the substrate to form a thin film.

As the photo-crosslinkable polymer, a photo-crosslinkable polymer or oligomer having a function group which can form crosslinkage under irradiation with actinic radiation is advantageously used.

The above photo-crosslinkable polymer or oligomer is selected, for example, from epoxy, polycarbonate, modified phenoxy, polyurethane, polyester and polyamide resins having a functional group photo-crosslinkable with actinic radiation such as UV light. These resins may be used alone or in combination.

As the epoxy resin having a photo-crosslinkable functional group, preferred are, e.g. epoxy (meth)acrylate and epoxynovolak (meth)acrylate.

As an epoxy (meth)acrylate, preferred are, e.g. compounds of the formula (I),

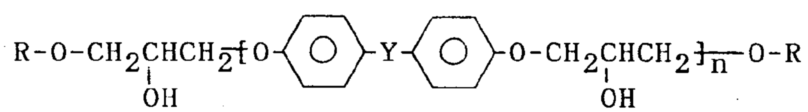 ..(1)

wherein Y is $-SO_2-$, -O-, -S- or an alkylene group having 1 to 5 carbon atoms, R is a (meth)acryloyl group and n is an integer of 1 to 20.

A compound of the above formula (I) in which Y is a methylene or 2,2-propylene group is preferred, since this compound exhibits a high Tg so that an increase in the recording properties can be achieved without causing a decrease in erasing properties.

As an epoxynovolak (meth)acrylate, preferred are compounds of the following formula (II),

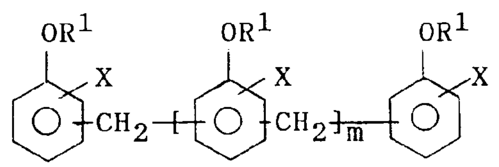 .... (II)

wherein each of $R^1$'s is

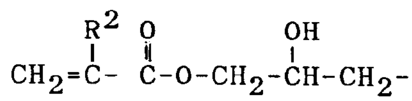

in which $R^2$ is methyl or hydrogen, m is an integer of 1 to 20, X is hydrogen, a halogen or a methyl group.

A compound of the above formula (II) in which $R^2$ in the definition of $R^1$ is hydrogen is preferred since such a compound is highly reactive.

As an epoxy resin, these compounds may be used alone or in combination.

Further, other polyfunctional acrylate may be also used in combination in an amount of not more than 30 % by weight based on the epoxy resin. Such a polyfunctional acrylate is selected, for example, from ethylene

di(meth)acrylate, tetramethylene di(meth)-acrylate, trimethylolpropane tri(meth)acrylate, pentaerythritol tetra(meth)acrylate, dipentaerythritol hexa(meth)acrylate, polyfunctional urethane acrylate, etc.

The combined use of such a polyfunctional acrylate is useful in many cases for increasing the reactivity of the epoxy resin, obtaining a polymer having a controlled Tg, obtaining a cured layer having improved dynamic properties, or improving the compatibility between a dyestuff and the epoxy resin.

The polycarbonate resin having a photo-crosslinkable functional group is preferably selected from polycarbonate resins containing at least 10 mol%, preferably at least 20 mol%, of at least one unit selected from the group consisting of the unit of the following formula (III),

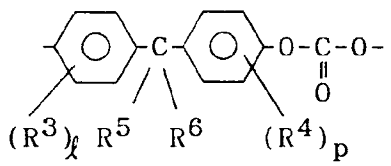

... (III)

wherein each of $R^3$ and $R^4$ is independently a monovalent aliphatic unsaturated hydrocarbon group having 2 to 8 carbon atoms, each of $R^5$ and $R^6$ is independently hydrogen, a saturated hydrocarbon group having 1 to 8 carbon atoms which may contain hydrogen or a halogen atom, or an aromatic hydrocarbon group, and each of $\ell$ and p is independently 0, 1 or 2 provided that $\ell + p \geq 1$;
the unit of the following formula (IV),

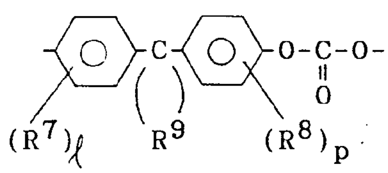

... (IV)

wherein each of $R^7$ and $R^8$ is independently a monovalent aliphatic unsaturated hydrocarbon group having 2 to 8 carbon atoms, $R^9$ is a divalent saturated hydrocarbon group having 4 to 10 carbon atoms, and each of $\ell$ and p is independently 0, 1 or 2, provided that $\ell + p \geq 1$;
and the unit of the following formula (V),

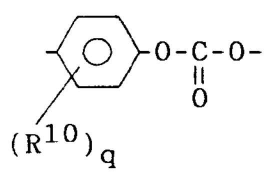

.... (V)

wherein $R^{10}$ is a monovalent aliphatic unsaturated hydrocarbon group having 2 to 8 carbon atoms, and q is 1 or 2;
and polycarbonate resins containing at least 10 mol%, preferably at least 20 mol%, of the unit of the following formula (VI),

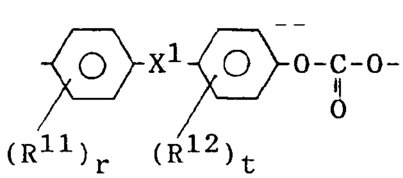

... (VI)

wherein $X^1$ is an alkylene group having at least 2 carbon atoms, a phenylene group, a cycloalkylene group, an aralkylene group,

$-O-$, $-S-$, $-SO_2-$, a group of $-C(CH_3)_2-Ar-C(CH_3)_2-$, a group of $-SO_2-Ar-SO_2-$ in which

Ar is an arylene group having 6 to 12 carbon atoms which may be optionally substituted on ring, or a group of -O-Z-O- in which Z is an alkylene group having 2 to 4 carbon atoms, each of $R^{11}$ and $R^{12}$ is independently a monovalent aliphatic unsaturated hydrocarbon group having 2 to 8 carbon atoms, and each of r and t is independently 0, 1 or 2, provided that $r + t \geq 1$.

In the above formulae (III), (IV), (V) and (VI), preferred examples of the aliphatic unsaturated hydrocarbon groups used as $R^3$, $R^4$, $R^7$, $R^8$, $R^{10}$, $R^{11}$ and $R^{12}$ are a vinyl group, an allyl group, a propenyl group, an isopropenyl group, a 1,4-butadienyl group, a 1,3-pentadienyl group, etc. Examples of the saturated hydrocarbon groups used as $R^5$ and $R^6$ are preferably a methyl group, an ethyl group, a propyl group, an isopropyl group, an isobutyl group, etc. Examples of the $R^9$ in the formula (IV) as a cyclic divalent group including the carbon atom to which $R^9$ bonds are preferably a cyclopentylidene group, a cyclohexylidene group, a bicyclo[2,2,1]heptylidene group, etc. Examples of the $X^1$ in the formula (VI) are preferably a phenylene group, a cycloalkylene group, an aralkylene

group, $-O-$, $-S-$, $-SO_2-$, $-C(CH_3)_2-Ar-C(CH_3)_2-$, $-SO_2-Ar-SO_2-$,

$-O-(CH_2)_2-O-$, $-O-(CH_2)_4-O-$, etc.

The modified phenoxy resin having a photo-crosslinkable functional group is selected from resins having a recurring unit of the following formula (VII),

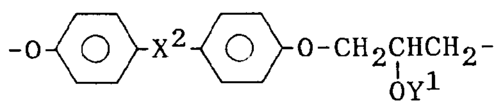 ... (VII)

wherein $X^2$ is a divalent aliphatic hydrocarbon group having 1 to 10 carbon atoms or an alicyclic hydrocarbon group and $Y^1$ is a photo-reactive substituent.

Examples of $X^2$ are preferably aliphatic or alicyclic hydrocarbon group such as methylene, 1,1-ethylene, 2,2-propylene, 2,2-butylene, 2,2-4-methylpentylene, 1,1-cyclohexylene, etc. Examples of $Y^1$ are preferably

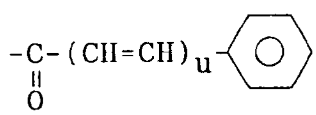

in which u is 1 or 2,

$-C(=O)-C(R^{13})=CH_2$

in which $R^{13}$ is hydrogen or a methyl group, etc.

As a phenoxy resin, there is used a homo-polymer or copolymer containing at least 10 mol%, preferably at least 20 mol% of the recurring unit of the above formula (VII). As a substituent $Y^1$ in the above formula (VII), preferred is a photo-reactive ester group above. Owing to the introduction of such a functional group, the phenoxy resin can be three-dimensionally crosslinked and cured, and an undesirable irreversible flow deformation can be prevented when the retention layer is irradiated with laser beam. In addition to this, since the

crosslinking and curing reaction can be carried out under irradiation with ultraviolet light, the above introduction is of an advantage to the production step.

The polyurethane resin having a photo-crosslinkable functional group is selected, for example, from urethane (meth)acrylates of the following formula,

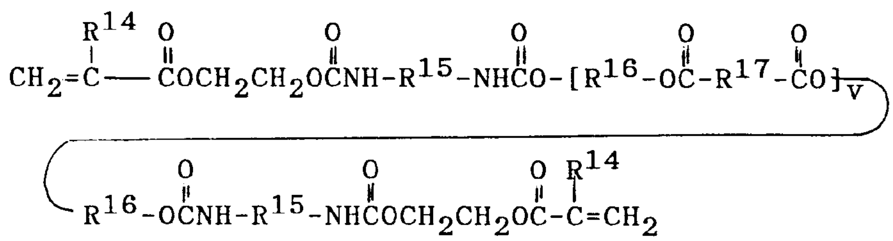

wherein $R^{14}$ is hydrogen or a methyl group, $R^{15}$ is a phenylene, cycloalkylene, alkylene or aralkylene group, each of $R^{16}$ and $R^{17}$ is independently an alkylene, phenylene or aralkylene group, and v is a number of 1 to 30.

Examples of such urethane (meth)acrylates are preferably as follows.

| $R^{14}$ | $R^{15}$ | $R^{16}$ | $R^{17}$ |
|---|---|---|---|
| $CH_3$ | 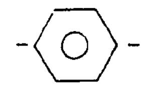 | $-(CH_2)_6-$ | $-(CH_2)_4-$ |
| $CH_3$ | 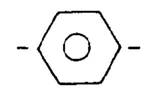 | 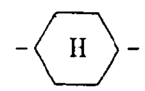 | $-(CH_2)_4-$ |
| $CH_3$ | 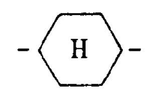 | 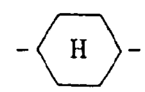 | $-(CH_2)_4-$ |
| $CH_3$ | 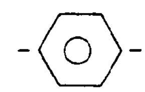 | 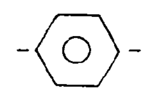 | $-(CH_2)_4-$ |
| $CH_3$ | 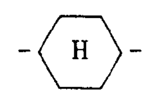 | 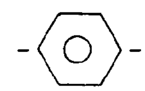 | $-(CH_2)_4-$ |
| $CH_3$ | 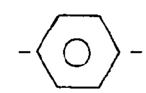 | $-(CH_2)_5-$ | 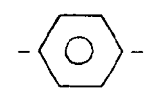 |

The polyester resin having a photo-crosslinkable functional group is preferably selected, for example, from esters of a polyol such as alkylene polyol, cycloalkylene polyol, phenylene polyol, etc. and either acrylic acid or methacrylic acid. Of these esters, preferred are polyethylene glycol di(meth)-acrylate, polypropylene glycol di(meth)acrylate, 1,3-butanediol di(meth)acrylate, triethylene glycol di(meth)acrylate, hydrogenated bisphenol-A-di(meth)-acrylate, tricyclodecanedimethylol di(meth)acrylate, dipentaerythritol hexamethacrylate, and trimethylol-propane trimethacrylate. In addition to these, a polyfunctional (meth)acrylate having an allyl or vinyl group may be also used as a polyester resin. Specific examples thereof are allyl methacrylate, p-styryloxy-ethyl methacrylate, etc.

The polyamide resin having a photo-crosslinkable functional group is selected, for example, from bisacrylamides such as alkylenebis(methacrylamide), cycloalkylenebis-(methacrylamide), etc. Examples of these are preferably hexamethylenebisacrylamide, pentamethylenebisacrylamide, octamethylenebisacrylamide, m-phenylenebisacrylamide, 1,4-cyclohexylenebisacrylamide, etc.

The above photo-crosslinkable resins can be polymerized or crosslinked by irradiation with ultraviolet light in the co-presence of a photo-polymerization initiator to be described below. These resins may be used alone or in combination.

When the epoxy, polyester, polyurethane or polyamide resin out of the above resins having a photo-crosslinkable functional group is used, it is advantageous to incorporate into the composition a photopolymerization initiator together with the dyestuff. The photopolymerization initiator is selected, for example, from benzophenone type initiators such as benzophenone, Michler's ketone, etc.; diketone type initiators such as benzyl, phenyl methoxy diketone, etc.; benzoin type initiators such as benzoin ethyl ether, benzyl dimethyl ketal, etc.; thioxanthone type initiators such as 2,4-diethyl-thioxanthone, etc.; quinone type initiators such as 2-methylanthraquinone, camphorquionone, etc; and the like. As required, a promoter such as an amine type promoter, etc., may be used in combination.

When the phenoxy resin having a photo-crosslinkable functional group is used, it is also preferred to incorporate into the composition a photopolymerization initiator and, optionally, a promoter. These photopolymerization initiator and promoter are selected from those examples described above.

When the polycarbonate resin having a photo-crosslinkable functional group is used, it is advantageous to prepare a composition containing a crosslinking agent. The crosslinking agent is preferably selected from (1) polyallyl compounds, (2) polyfunctional acrylates, (3) polymercaptans, (4) polyfunctional azide compounds, etc. Examples of the polyallyl compounds are diallyl compounds such as diallyl phthalate, diallylamine hydrochloride, diallyl ether, etc. Examples of the polyfunctional acrylates are typically trimethylolpropane triacrylate, ethylene glycol dimethacrylate, pentaerythritol tetraacrylate, etc. Examples of the polymercaptans are pentaerythritol tetra(3-mercaptopropinonate), 1,4-dimercaptohexane, etc. As a polyfunctional azide compound, preferred are aromatic azides, which have comparatively good thermal stability. Examples of the, polyfunctional azide compounds are preferably 4,4′-diazidobenzal acetone, 2,6-di(4′-azidobenzal)-cyclohexanone, 2,6-di(4′-azidobenzal)-4-methylcyclohexanone, di[4-(4′-azidophenyl)-butadienyl]ketone, 4,4′-diazidochalcone, 4,4′-diazidostilbene-2,2′-disulfonic acid, etc. When a polyallyl compound, a polyfunctional acrylate or a polymercaptan out of the above cross-linking agent is used, it is preferred to further incorporate a photo-radical initiator into the composition. The photo-radical initiator is preferably selected from benzophenone type compounds such as benzophenone, Michler's ketone, etc.; diketone type compounds such as benzyl, phenyl methoxy diketone, etc.; benzoin type compounds such as benzoin ethyl ether, benzyl dimethyl ketal, etc.; thioxanthone type compounds such as 2,4-diethylthioxanthone, etc.; quinone type compounds such as 2-methylanthraquinone, camphorquionone, etc; and the like. In addition to the above initiators, other photo-crosslinking reaction promoter (e.g. N,N-diethylaminobenzene derivative) may be used in combination as required.

The composition used in the step (1) of the process of the present invention contains a dyestuff in addition to the photo-crosslinkable polymer or oligomer. Usable are those dyestuffs which have high affinity with the photo-crosslinkable polymer or oligomer and are stable to heat and laser beam. Specific examples of the dyestuff are preferably polymethine dyestuffs typified by phthalocyanine, naphthalocyanine, naphthoquinone, nickel-dithiol complex and cyanine. Particularly preferred are organic solvent-soluble phthalocyanine and naphthalocyanine derivatives of which the aromatic ring(s) is substituted with an alkyl group having 2 to 20 carbon atoms, an aryl group or an aryloxy group; and organic solvent-soluble naphthalocyanine derivatives of which the central metal is substituted with an alkyloxy group having 2 to 20 carbon atoms, an alkylsiloxy group or an arylsiloxy group.

Of the above dyestuffs, for example, a cyanine dyestuff, a polymethine dyestuff, a phthalocyanine dyestuff, a naphthalocyanine dyestuff, a nickel-dithiol complex and mixtures of these are near infrared-absorbing dyestuffs having sufficient absorbance in the UV light region. These near infrared-absorbing dyestuffs are advantageously usable when the actinic radiation used for the irradiation in the step (2) to be described later is UV light.

The amount of the dyestuff for use per 100 parts by weight of the photo-crosslinkable polymer is preferably 2 to 50 parts by weight, more preferably 5 to 30 parts by weight.

The optimum amount of the dyestuff in the above range, for example, the optimum amount of the near infrared-absorbing dyestuff depends on the molar absorption coefficient to UV light used in the step (2) and the thickness of the thin film. For example, when a nickel complex (PA-1006, supplied by Mitsui Toatsu Fine Inc.) to be described later is used, and when the attenuation factor of incident light is adjusted to about 1/10 in the reverse side of the thin film while the thin film thickness is adjusted to 4 μm, it is the most suitable to use 20 phr, based on the photo-crosslinkable polymer, of this dyestuff. The optimum amount of the dyestuff is simply experimentally determined.

The composition used in the present invention may optionally contain a compound having an absorption band in the wavelength region of actinic radiation.

Such a compound is preferably selected from those which are generally well known as a ultraviolet light absorber, such as salicylic acid type, benzophenone type, benzotriazole type, cyanoacrylate type, etc. These compounds are used as a UV light absorbing additive.

The amount of the above compound for use per 100 parts by weight of the photo-crosslinkable polymer is

preferably not more than 50 parts by weight, more preferably not more than 30 parts by weight.

In order to form a crosslinked structure under irradiation with actinic radiation in the step (2), the composition used in the present invention is required to contain at least one compound which can absorb the actinic radiation. This requirement is fully met if at least one of the above photo-crosslinkable polymer or oligomer and the above dyestuff has an absorption band in the wavelength region of the actinic radiation. Otherwise, the above compound having an absorption band in the wavelength region of the actinic radiation may be optionally used as described above.

In the present invention, the above composition, which is preferably in the form of a solution thereof in an organic solvent, is applied on the substrate to form a thin film.

The organic solvent is preferably selected, for example, from those which can dissolve at least 10 % by weight of the above photo-crosslinkable polymer or oligomer and at least 1 % by weight of the dyestuff. Examples of such an organic solvent are aliphatic ketones such as acetone, methyl ethyl ketone, methyl isobutyl ketone, cyclohexanone, etc.; aliphatic esters such as ethyl formate, ethyl acetate, amyl acetate, etc.; cellosolves such as methyl cellosolve, ethyl cellosolve, etc.; hydrocarbon halides such as dichloromethane, chloroform, 1,2-dichloroethane, trichlene, etc.; and aromatic hydrocarbons such as toluene, xylene, etc. These organic solvents may be used alone or in combination.

The above solution is adjusted in such a concentration that the solid content is, for example, 5 to 50 % by weight, preferably 10 to 30 % by weight.

The composition is applied on the substrate by a customary method such as a spin coating method, a casting method, etc.

The composition used in the present invention may be applied directly on the substrate or applied on a layer formed on the substrate. Such a layer may be a subbing layer, an adhesive layer or a reflection layer. Further, the above layer may be a cushion layer when the object recording medium is one of which the recording portion is irradiated with laser beam from that side of the medium which is opposite to the side where recording layer exists, i.e. through the substrate.

In the step (2) of the present invention, the thin film of the above composition is then irradiated with actinic radiation.

The actinic radiation is selected, for example, from ultraviolet light, X-ray, $\gamma$-ray, $\alpha$-ray, etc. Particularly preferred of these is ultraviolet light. As a ultraviolet light source, preferred are a low-pressure mercury lamp, an intermediate-pressure mercury lamp, a high-pressure mercury lamp, a metal halide lamp, etc. The light source intensity is preferably 1 mW/cm to 1 kW/cm. Depending upon the light source intensity and photo-reaction rate, the irradiation time is chosen preferably from 1 second to 1 hour, preferably from 10 seconds to 10 minutes.

According to the present invention, the thin film of the composition formed on the substrate is irradiated with actinic radiation, whereby the composition forming the thin film optically reacts to form a crosslinked structure. The characteristic feature of the crosslinked structure is that the crosslinking density of the crosslinked polymer gradually decreases in a layer thickness direction from one surface to the other.

Such a change in the crosslinking density can be achieved, for example, by (a) a method in which the thickness of the thin film to be formed is adjusted in the step (1) and the thin film is irradiated with actinic radiation which can be absorbed by a photo-absorbing polymer in the thin film in the step (2), (b) a method in which a compound which can absorb actinic radiation is optionally incorporated into the composition for forming the thin film in the step (1) and the thin film is irradiated with actinic radiation which can be absorbed by this optional compound, or (c) a method in which a compound which turns into a compound having a different absorbance after the absorption of actinic radiation is incorporated into the composition for forming the thin film in the step (1) and the thin film is irradiated with actinic radiation in the step (2).

In the method (a), the thickness of the thin film is adjusted according to the absorbance of the photo-crosslinkable polymer to actinic radiation such that the intensity of actinic radiation irradiated from one surface of the thin film is decreased to 1/10 to 1/100 in the other surface of the thin film, i.e. absorbance $A = \log_{10}(I_0/I) = 1$ to 2, and then, the thin film is irradiated with actinic radiation having proper intensity.

When actinic radiation has a relatively high intensity, e.g. 100 W/cm or higher, it is preferred to adjust the thin film thickness to 1 to 10 $\mu$m, and it is more preferred to adjust it to 2 to 5 $\mu$m. On the other hand, when actinic radiation has a relatively small intensity, e.g. less than 100 W/cm, it is preferred to adjust the thin film thickness to 0.2 to 5 $\mu$m, and it is more preferred to adjust it to 0.5 to 3 $\mu$m.

In the method (b), when the compound which can absorb actinic radiation has a sufficient absorbance to actinic radiation, the intensity of the actinic radiation can be effectively attenuated as described above by adjusting the amount of the compound properly. When the dyestuff used can absorb actinic radiation sufficiently, for example, when the dyestuff used is a near infrared-absorbing dyestuff such as a cyanine dyestuff, a polymethine dyestuff, a phthalocyanine dyestuff, naphthalocyanine dyestuff and a nickel-dithiol complex, a similar effect can be produced under the conditions of irradiation with actinic radiation by properly adjusting

the amount of such a dyestuff.

The suitable amount of each of the compound which can absorb actinic radiation and the dyestuff depends on the molar absorption coefficient and the thin film thickness.

In the method (c), the compound which turns into a compound having a different absorbance to actinic light after the absorption of actinic radiation is selected from generally known ultraviolet light absorbers such as salicylic acid type, benzophenone type, benzotriazole type or cyanoacrylate type absorbers.

In the method (c), a desirable effect can be also similarly produced by properly adjusting the amount of the above compound.

When the thin film is provided with a change in the crosslinking density in the layer thickness direction by any one of the above methods, it is necessary to optimize the irradiation time, the number of irradiations and the irradiation position according to the actinic radiation intensity. As an irradiation source, preferred are a low-pressure mercury lamp, an intermediate-pressure lamp, a high-pressure mercury lamp, a methyl halide lamp, etc. The light source intensity (power) is 0.001 W/cm to 1,000 W/cm. The irradiation time, the number of irradiations and the irradiation position depend on the light source intensity, the layer thickness, the optical reaction rate and the degree of absorption of actinic radiation. In general, it is advantageous to set these conditions such that the total energy dose is 0.5 to 10 J/cm$^2$, preferably 1 to 5 J/cm$^2$. In view of productivity, the irradiation time is 1 second to 1 hour, preferably 1 second to 10 minutes. The number of irradiations depend on the light source power and the layer thickness. For example, when the thin film having a thickness of 2.0 μm is irradiated with a light source having an intensity of 500 W/cm, which is positioned at a distance of 9 cm from the layer surface, it is preferred to carry out the irradiation at a rate of 2 m/minute 5 to 10 times. When the thin film is irradiated with actinic radiation a plurality of times, the irradiation may be carried out with actinic radiation under the same conditions every time, or may be carried out with changing the conditions. In particular, when the dyestuff contained in the thin film is easily oxidized and deteriorated under irradiation with actinic radiation in the co-presence of oxygen, it is preferred to employ a method in which the thin film surface is first cured rapidly under high energy irradiation conditions so that the diffusion of oxygen into the thin film hardly occurs, and then the thin film is further irradiated with actinic radiation at a relatively low energy dose as required thereby to crosslink the interior of the thin film. Further, the deterioration of the dyestuff can be also prevented by (1) a method in which the irradiation with actinic radiation is carried out in an atmosphere of inert gas such as nitrogen, or (2) a method in which the surface of the thin film is covered with an actinic radiation transmitting film or cover sheet to shut off oxygen when the irradiation with actinic radiation is carried out.

The change or gradient of the crosslinking density which is provided to the thin film as above can be confirmed by staining a sliced piece of the thin film with osmium oxide or uranyl nitrate and observing it with a transmission type electron microscope.

In the above-produced recording layer having a change in the crosslinking density in the layer thickness direction, the resin layer in the vicinity of one surface of the recording layer exhibits an increased elastic modulus at room temperature and has increased capability of holding bumps. Further, the resin in the interior of the recording layer has a decreased crosslinking density as compared with the surface, and it is therefore easily thermally expanded. As a result, a high bump contrast can be obtained.

The rewritable organic recording medium of the present invention is advantageously useful for recording data, and the recorded data is erasable.

That is, according to the present invention, there are also provided:

a method of recording data, which comprises irradiating the rewritable organic recording medium of the present invention with strong laser beam, as pulse, which oscillates at a wavelength corresponding to the absorption wavelength of the dyestuff contained in the recording layer, thereby to form a bump, and

a method of erasing the bump or recorded data, which comprises continuously irradiating the bump formed on the recording layer of the rewritable organic recording medium of the present invention with laser beam oscillating at a wavelength corresponding to the wavelength of the dyestuff contained in the recording layer to heat the bump until the bump is brought into a rubbery state, and then slowly cooling the recording layer.

The recording and erasing principle of the present invention is briefly described below by reference to Fig. 1, in which a transparent substrate (A) has a recording layer (B) formed thereon. The recording layer (B) is crosslinked by irradiation with actinic radiation, and provided with a crosslinking density gradient in which the crosslinking density decreases in the direction from the surface side to the substrate side (Fig. 1(1a)). The recording layer is irradiated with laser beam oscillating at an absorption wavelength of a dyestuff (D) from the substrate side or from the recording layer surface side, whereby a bump (C) is formed on the recording layer surface, or data is recorded (Fig. 1(1b)). The once recorded data is erased as follows. The laser beam intensity is set at a level lower than that used for recording, and the bump is irradiated with laser beam having such a lower intensity such that the temperature at the irradiated portion is increased to a little higher level than Tg of the resin of the crosslinked layer in the vicinity of the recording layer surface. In addition, the recorded data is

read by detecting the presence or absence of the bump and a difference in a form as a difference in reflectance when the recording layer surface is irradiated with laser beam which is as weak as the crosslinked resin layer does not reach the temperature of its Tg. For this purpose, the recording layer surface and/or the substrate surface may be further provided with a reflection layer as required, so that the reflectance of the recording layer surface is increased.

The laser beam source used for recording data depends on the dyestuff (D) used. When a near infrared-absorbing dyestuff is used, a gallium/arsenic laser diode can be used. When a visible light-absorbing dyestuff is used, a helium neon laser, a argon laser, a ruby laser and a dyestuff laser can be used. Data can be desirably recorded with any one of these lasers at an output of 5 to 30 mW, preferably 7 to 20 mW for an irradiation time of 5 to 0.1 micro-second. When the laser irradiation conditions are more moderate than the above range, data is not fully recorded. When the conditions are severer than the above range, the recording layer sometimes undergoes flow deformation so that the data erasing is impossible. On the other hand, recorded data can be desirably erased with any one of the above lasers at an output of, preferably, 1 to 10 mW, more preferably 3 to 7 mW for an irradiation time of 0.1 to 20 microseconds.

As described above, the recording method of the present invention uses the basic principle that a difference in reflectance caused by the formation and extinction of bumps is read on the basis of the specific thermal characteristics of the recording layer. Therefore, the recording medium of the present invention does not involve evaporation and dissipation of the dyestuff, and therefore reversibly permits data recording and erasing. Further, in the recording medium of the present invention, the recording layer can be easily formed by any one of spin coating and casting methods. Therefore, the recording medium of the present invention has an industrial advantage that the cost for producing media can be decreased.

The present invention will be further explained in detail below by reference to Examples.

Referential Example 1

Preparation of 2,2′-diallylbisphenol A/1,1′-cyclohexylenebisphenol Z copolycarbonate:

While dry nitrogen gas was being flowed in a one-liter three-necked round-bottomed flask equipped with a stirrer, a thermometer, a gas introducing tube and a reflux condenser, the flask was charged with 53.7 parts by weight of a 48.5 % sodium hydroxide aqueous solution, 230.8 parts by weight of water, 31.4 parts by weight of 2,2′-diallylbisphenol A and 27.3 parts by weight of 1,1′-cyclohexylenebisphenol Z to-form a solution. The solution was cooled to 20°C in an ice bath, and while the solution was stirred, 26.2 parts by weight of phosgene was slowly introduced over 1 hour. Thereafter, 8.4 parts by weight of a 48.5 % NaOH aqueous solution was added, and 0.61 part by weight of p-tert-butylphenol as a reaction terminator was added. And then, the polymerization reaction was continued at 30°C for 1 hour. After the reaction, a methylene chloride layer was separated, and the remaining reaction product was acidified with HCl, and repeatedly washed with water to remove dissolved salts. Thereafter, methylene chloride was evaporated to give a solid (yield 99 %). The so-obtained polymer had a specific viscosity, measured in methylene chloride at 20°C, of 0.21. This polymer showed that 10 % by weight of it was soluble in methylene chloride, chloroform, toluene, tetrahydrofuran, cyclohexanone, etc. The measurement by proton nuclear magnetic resonance spectrum showed that the polymer was a polycarbonate in which 2,2′-diallylbisphenol A carbonate unit of the following formula,

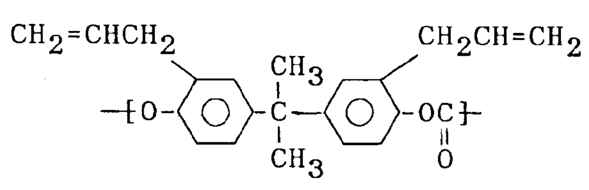

and bisphenol Z carbonate unit of the following formula

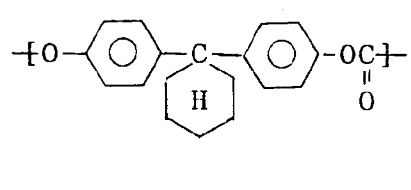

were copolymerized in a molar ratio of about 1:1.

Examples 1 - 4

Preparation of media having a crosslinking density gradient provided by UV radiation:

100 Parts by weight of the allyl-substituted polycarbonate copolymer obtained in Referential Example 1, 10 parts by weight of a cyanine dyestuff (NK-125, supplied by Japan Photosensitizer Research Institute), 10 parts by weight of pentaerythritoltetra(3-mercaptopropionate) and 1 part by weight of Irgacure 907 were dissolved in chloroform to form a homogeneous solution containing 10 % by weight of solids. The solution was spin-coated on glass substrates so as to form layers having a film thickness (Examples 1 to 4) as shown in Table 1, and dried at 80°C for 10 minutes. The layer obtained in Example 1 was measured for an absorbance with an ultraviolet-visible light spectrometer to show 1.45 (light transmittance = 3.5 %) at a wavelength of 260 nm. Thereafter, the layer was cured by irradiating it with a high-pressure mercury lamp at an irradiation energy dose of 1.2 J/cm$^2$. The resultant layer showed an absorbance of 1.16 (light transmittance = 6.9 %) at a wavelength of 260 nm. Similarly, the other layers were cured by irradiating them with a high-pressure mercury lamp at an irradiation energy dose of 1.2 J/cm$^2$. The double bond residual ratio in each layer was determined on the basis of the measurement of decrease ratios of absorption peaks based on C=C double bonds at 810 cm$^{-1}$ and 1,635 cm$^{-1}$ in a Fourier transform infrared absorption spectrum. As shown in Table 1, the larger the layer thickness was, the higher the double bond residual ratio was. These data have showed that the UV light reflectance, i.e. crosslinking density, of the above media can be controlled by controlling the layer thickness.

Table 1

| Example | Layer thickness (μm) | Double bond residual ratio (%) |
|---|---|---|
| 1 | 0.56 | 33.2 |
| 2 | 1.01 | 45.6 |
| 3 | 2.60 | 66.2 |
| 4 | 3.43 | 70.1 |

Example 5

The medium obtained in Example 3 was irradiated with laser beam having an oscillation wavelength of 830 nm and an output of 10 mW to show formation of a clear projection portion (bump) having a diameter of 1.4 μm on the medium surface. Thereafter, this record spot was irradiated with 7 mW laser diode beam having a beam diameter of 5 μm and an oscillation wavelength of 780 nm for 6 microseconds, to show that the above bump was erased to such an extent that it was unrecognizable under microscopic observation. These results show that the above recording medium can be a writable and erasable optical recording medium.

Example 6

In Example 5, the medium resin was changed from the allyl-substituted polycarbonate copolymer to an allyl-substituted polycarbonate homopolymer which is described at the end of this Example, and the resultant layer was irradiated with UV light render the same conditions as those in Examples 1 to 4, whereby a crosslinked medium having a layer thickness of 3.1 μm was obtained. The layer had an absorbance, at a wavelength of 260 nm, of 2.04 before UV light irradiation and 1.63 after UV light irradiation. The so-obtained medium was irradiated with laser diode light having an oscillation wavelength of 830 nm and an output of 10 mW for 0.24 microsecond to show formation of a clear projection portion (bump) having a diameter of 1.4 μm on the medium surface. Thereafter, this record spot was irradiated with 7 mW laser diode light having a beam diameter of 5 μm and an oscillation wavelength of 780 nm for 8 microseconds to show that the above bump was erased to such an extent that it was unrecognizable under microscopic observation. These results show that the above recording medium can be a writable and erasable optical recording medium.

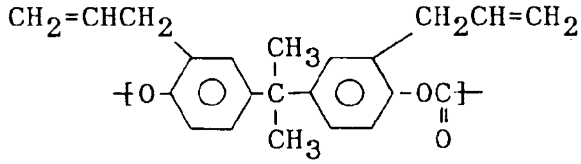

Allyl-substituted polycarbonate

Example 7

In Example 5, the medium resin was changed from the allyl-substituted polycarbonate copolymer to an epoxy acrylate oligomer which is described at the end of this Example, and the resultant layer was irradiated with UV light under the same conditions as those in Examples 1 to 4, whereby a crosslinked medium having a layer thickness of 3.1 μm was obtained. The layer had an absorbance, at a wavelength of 260 nm, of 2.48 before UV light irradiation and 1.98 after UV light irradiation. The so-obtained medium was irradiated with laser diode light having an oscillation wavelength of 830 nm and an output of 10 mW for 0.12 microsecond to show formation of a clear projection portion (bump) having a diameter of 1.6 μm on the medium surface. Thereafter, this record spot was irradiated with 7 mW laser diode light having a beam width of 5 μm and an oscillation wavelength of 780 nm for 6 microseconds to show that the above bump was erased to such an extent that it was unrecognizable under microscopic observation. These results show that the above recording medium can be a writable and erasable optical recording medium.

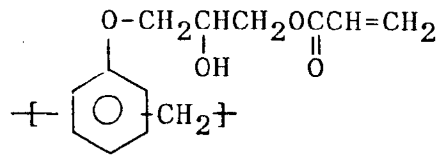

Epoxy acrylate

Example 8

In Example 5, the medium resin was changed from the allyl-substituted polycarbonate copolymer to a phenoxy resin modified with cinnamic acid which is described at the end of this Example, and the resultant layer was irradiated with UV light under the same conditions as those in Example 1 to 4, whereby a crosslinked medium having a layer thickness of 2.1 μm was obtained. The layer had an absorbance, at a wavelength of 260 nm, of 1.98 before UV light irradiation and 1.75 after UV irradiation. The so-obtained medium was irradiated with recording laser beam having an oscillation wavelength of 830 nm and an intensity of 10 mW for 60 microseconds to show formation of a clear projection portion (bump) on the medium surface. Thereafter, this record spot was irradiated with 7 mW laser diode light having a beam diameter of 5 μm and an oscillation wavelength of 780 nm for 6 microseconds to show that the above bump was erased to such an extent that it was unrecognizable under microscopic observation. These results show that the above recording medium can be a writable and erasable optical recording medium.

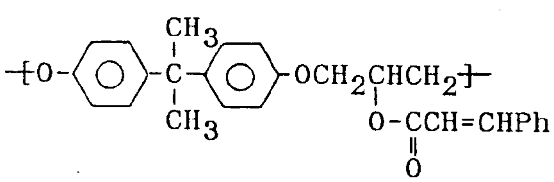

Phenoxy resin modified with cinnamic acid

Example 9

An aluminum disk, as a substrate, was spin-coated with the same resin solution as that obtained in Example

1 at a spinning rate of 2,500/minute. The resultant layer was irradiated with UV light under the same conditions as those in Example 1 to give a crosslinked medium. While the medium was turned at a linear velocity of 1.5 m/second, the medium was irradiated with a laser beam having an oscillation wavelength of 830 nm and an intensity of 10 mW at a frequency of 3 MHz (duty ratio 50) to show formation of a line of clear bumps having CNR of 55 dB and a diameter of 1.1 μm. Thereafter, while the medium was rotated at a linear velocity of 1.5 m/second, the bump line was irradiated with 7 mW laser diode light having a beam diameter of 1.2 μm and an oscillation wavelength of 780 nm. As a result, the above CNR was reduced to 12 dB, and the bumps were erased to such an extent that they were unrecognizable under microscopic observation. These results have showed that the above recording medium is writable and erasable under rotating condition.

Comparative Example 1

In Example 7, the same epoxy acrylate used in Example 7 was heated at 80°C for 2 hours in the co-presence of 3 parts by weight of azobisisobutyronitrile (AIBN) instead of crosslinking the epoxy acrylate by irradiation with UV light, whereby a substantially homogeneous, complete crosslinked medium having no crosslinking density gradient in the layer thickness direction was obtained. This medium was irradiated with laser diode light under the same conditions of Example 8 to show a recording sensitivity of 0.36 microsecond and an erasing sensitivity of 12 microseconds, which were lower than those of the medium having a crosslinking density gradient (0.12 microsecond and 6 microseconds).

## Claims

1. A rewritable organic recording medium comprising:
   (A) a substrate, and
   (B) a single recording layer containing a crosslinked polymer and a dyestuff, the crosslinked polymer having a crosslinking density which gradually decreases in a layer thickness direction from one surface of the single recording layer to the other surface of the single recording layer.

2. A process for the production of a rewritable organic recording medium, which comprises:
   (1) applying a composition containing a dyestuff, a photo-crosslinkable polymer or oligomer and optionally a compound having an absorption band in a wavelength region of actinic radiation on a substrate or a layer positioned on the substrate to form a thin film of the composition, provided that at least one of the dyestuff and the photo-crosslinkable polymer or oligomer has an absorption band in a wavelength region of actinic radiation when the composition does not contain the compound having an absorption band in a wavelength region of actinic radiation, and
   (2) irradiating the thin film of the composition with actinic radiation.

3. A process according to claim 2, wherein the thin film of the composition is irradiated with the actinic radiation in a step (2) such that the actinic radiation which has passed through the thin film has an intensity of 1/10 to 1/100 of the intensity of the actinic radiation on a surface of the thin film of the composition.

4. A process according to claim 2, wherein the thin film of the composition formed in a step (1) has a layer thickness of 0.2 to 5.0 μm.

5. A process according to claim 2, wherein irradiation with actinic radiation is carried out by multistage procedures of at least two-stage irradiations.

6. A method of recording data, which comprises irradiating a rewritable organic recording medium recited in claim 1 with strong laser beam, as pulse, which oscillates at a wavelength corresponding to an absorption wavelength of the dyestuff contained in the recording layer, thereby to form a bump.

7. A method of erasing a bump or record, which comprises continuously irradiating a bump formed on a recording layer of the rewritable organic recording medium recited in claim 1 with laser beam oscillating at a wavelength corresponding to a wavelength of a dyestuff contained in the recording layer to heat the bump until the bump is brought into a rubbery state, and then slowly cooling the recording layer.

FIG. 1